## Europäisches Patentamt

## European Patent Office

## Office européen des brevets

(11) Veröffentlichungsnummer: **0 009 246**
**A1**

(12) **EUROPÄISCHE PATENTANMELDUNG**

(21) Anmeldenummer: **79103544.7**

(22) Anmeldetag: **20.09.79**

(51) Int. Cl.³: **B 60 J 1/10**

(30) Priorität: **21.09.78 DE 2841177**

(43) Veröffentlichungstag der Anmeldung: **02.04.80**
**Patentblatt 80/7**

(84) Benannte Vertragsstaaten: **AT FR GB IT SE**

(71) Anmelder: **MASCHINENFABRIK AUGSBURG-NÜRNBERG Aktiengesellschaft, Dachauer Strasse 667, D-8000 München 50 (DE)**

(72) Erfinder: **Geyer, Ludwig, Wettersteinstrasse 10, D-8031 Puchheim (DE)**
Erfinder: **Jarausch, Franz, Bergstrasse 9, D-8061 Röhrmoos (DE)**

(54) **Personenfahrzeug mit eingeklebten Fensterscheiben.**

㊗ Bei einem Personenfahrzeug mit Seitenwand aus Metallrohrrahmen sind zur Aufnahme von einzuklebenden Fensterscheiben (4) die Fensterfalze (31) in die Seitenholme (3) und/oder Längsgurte (2) der aus Metallrohr gebildeten Fensterzargen integral eingeformt.

EP 0 009 246 A1

ba/zo
MASCHINENFABRIK AUGSBURG-NÜRNBERG
Aktiengesellschaft

München, den 12. September 1979

<center>Personenfahrzeug mit eingeklebten
Fensterscheiben</center>

Die Erfindung bezieht sich auf ein Personenfahrzeug mit einer, einen Metallrohrrahmen umfassenden Seitenwand, in der von vertikalen Seitenholmen sowie einem oberen und einem unteren Längsgurt gebildete Fensterzargen zur Aufnahme von in den Metallrohrrahmen einzuklebenden Fensterscheiben vorgesehen sind.

Bei bekannten Personenfahrzeugen dieser Gattung, insbesondere bei Omnibussen sind die vertikalen Seitenholme als auch die oberen und unteren Längsgurte als Vierkantrohre mit üblicherweise rechteckigem Querschnitt ausgebildet. Um Anschlagflächen für die Fensterscheiben zu

2.1816

erhalten, werden an die Außenseiten dieser Vierkantrohre Winkelprofile aufgesetzt und üblicherweise durch Punktschweißung mit den Vierkantrohren verbunden. Diese bekannte Ausbildung der Fensterzargen zur Einklebung von Fensterscheiben hat unter anderem den Nachteil, daß durch die Punktschweißung der Winkelprofile auf die Vierkantrohre an der Schweißstelle der Rostschutzüberzug auf beiden Profilen zerstört wird und dadurch langfristig eine Zerstörung dieser so gebildeten Fensterzarge durch Rost nicht vermeidbar ist. Ein anderer Nachteil dieser bekannten Zargenausbildung besteht darin, daß die Verbindung der als Anschlagrahmen für die Fensterscheibe dienenden Winkelprofile mit den Vierkantrohren aufgrund der Punktschweißung nicht genügend starr ist, so daß keine ausreichend ebene Anschlagfläche für die einzuklebenden Fensterscheiben entsteht. Gerade bei der Verklebung von Fensterscheiben in den Seitenwänden von Personenfahrzeugen kommt es aber auf absolute maßhaltigkeit, insbesondere auf absolut ebene Ausbildung der Anschlagfläche besonders an, da die Klebeverbindung in erheblichem Maße Schubkräfte zwischen dem Metallrohrrahmen der Seitenwand und den Fensterscheiben übertragen muß. Schließlich ist hohe Maßhaltigkeit auch noch deshalb erforderlich, weil die Fensterscheiben über den gesamten Umfang des Fensterausschnittes außen bündig mit der Seitenwandfläche abschließen sollen, was im Hinblick auf eine strömungsgünstige Ausbildung der Seitenwände von Personenfahrzeugen bedeutsam ist.

Aufgabe der vorliegenden Erfindung ist es deshalb, ein Personenfahrzeug der gattungsgemäßen Art so auszubilden, daß absolut ebene, maßhaltige und mit dem Metallrohrrahmen eine hochfeste Verbindung bildende Anschlagflächen für die einzuklebenden Fensterscheiben vorhanden sind, wobei gleichzeitig der Herstellungsaufwand für diese Zargenausbildung gegenüber den bekannten Konstruktionen verringert werden soll.

Zur Lösung dieser Aufgabe wird vorgeschlagen, daß die Seitenholme und/oder die Längsgurte Hohlprofile sind, in die die Fensterfalze integral eingeformt sind.

Bei der erfindungsgemäßen Lösung braucht die Fensterzarge also nicht mehr dadurch gebildet zu werden, daß auf ein Vierkantrohr ein zweites Profilelement aufgeschweißt oder mit diesem in anderer Weise verbunden wird, vielmehr wird dem jeweiligen, den Fensterausschnitt begrenzenden Metallrohr unmittelbar ein als Zarge geeignetes Profil gegeben. Die Herstellung solcher Profile, in denen die Fensterfalze integral eingeformt sind, ist dabei kaum aufwendiger als die Herstellung von Vierkantrohren, da es sich um Strangpreßprofile handeln kann. Die Vorteile der erfindungsgemäßen Lösung sind jedoch erheblich, indem zum einen jegliche Verbindung, die Korrosion nach sich ziehen könnte, vermieden wird, und zum andern absolute Maßhaltigkeit und höchste Festigkeit der Anschlagflächen für die Fensterscheiben erzielt wird. Die zuletzt genannten Eigenschaften sind aber von größter Bedeutung für die Anwendung geklebter Fensterscheiben in Personenfahrzeugen, da die Fensterscheiben gerade deshalb mit den Metallrohrrahmen verklebt werden, um sie als tragendes Bauteil zur Erhöhung der Festigkeit der Fahrzeugseitenwand mit heranzuziehen.

Besonders bevorzugte Hohlprofile für die Seitenholme und die Längsgurte sind L-Hohlquerschnitte oder T-Hohlquerschnitte, wobei bei letzteren jeweils ein Winkelraum zwischen dem T-Steg und dem T-Querstück einen Fensterfalz bildet. Die T-Hohlquerschnitte sind also vorzugsweise als solche Zargenteile einzusetzen, bei

2.1816
12.9.79

denen gleichzeitig zwei nebeneinander oder übereinander liegende Fensterscheiben gehalten werden sollen.

Bei einer anderen bevorzugten Ausführungsform der Erfindung können die Seitenholme und/oder die Längsgurte auch als Vierkantrohr mit zum Fensterausschnitt hin aus einer Rohrwand herausragenden Falznase, die integral an das Vierkantrohr angeformt ist, ausgebildet sein.

Besonders vorteilhaft ist es, als Längsgurte solche Hohlprofile mit Falznase zu verwenden, als Seitenholme dagegen L- oder T-Hohlquerschnitte, da die Seitenholme dann von ihrer oberen und unteren Stirnseite her schlitzförmig so tief ausgeschnitten werden können, daß sie auf die Falznasen des oberen und unteren Längsgurtes aufgesteckt statt auf der die Falznase ausbildenden Rohrwand aufliegen. Hierdurch läßt sich eine wenig zerklüftete Eckenverbindung zwischen den Längsgurten und den Seitenholmen des Metallrohrrahmens erzielen.

Anstelle des T-Hohlquerschnitts, bei dem gleichzeitig zwei Fensterfalze ausgebildet sind, können auch Querschnitte zur Anwendung kommen, bei denen zwei Falznasen in symmetrischer Anordnung an gegenüberliegenden Rohrwänden angeformt sind. Ein solcherart ausgebildetes Profil könnte von zwei mit ihren Rändern gegeneinander gesetzten Hutprofilen gebildet werden, wobei die Ränder die Falznasen ausbilden. Allerdings ist ein solches zusammengesetztes Hohlprofil wegen der eingangs erwähnten Korrosionsgefährdung weniger vorteilhaft als ein Strangpreßprofil oder ein in sonstiger Weise integral hergestelltes Profil.

2.1816
12.9.79

Soweit Zargenprofile vorgesehen sind, die gleichzeitig zwei Fensterfalze ausbilden, kann es von Vorteil sein, wenn die Seitenflächen der Falze mit den Grundflächen jeweils einen Winkel $\alpha$ einschließen, der kleiner als 90° ist. Ein solches Einziehen der Seitenflächen der Falze nach hinten ermöglicht das Aufklipsen von Verkleidungselementen zur Abdeckung der zwischen den Scheiben und der Zarge entstehenden Fugen.

Einem ähnlichen Zweck, nämlich dem Aufklipsen von Verkleidungselementen vorzugsweise aus Kunststoff, wie z.B. PU-Schaum auf der Innenseite des Personenfahrzeugs dient eine weitere Ausbildung der Erfindung, die darin besteht, daß in den gegenüberliegenden Seitenwänden der Seitenholme kerbartige Vertiefungen eingeformt sind.

Schließlich soll bei einer bevorzugten Ausführungsform in der oberen Seitenwand des unteren Längsgurtes zur Ausbildung von Wasserrinnen kerbartige Vertiefungen und/oder eine aus der Seitenwandebene nach oben herausragende Nase eingeformt sein. Diese Ausbildung, die wiederum gegenüber einem normalen Vierkantprofil ohne zusätzlichen Herstellungsaufwand erreichbar ist, hat den Vorteil, daß das sich in Personenfahrzeugen an der Innenfläche der Fensterscheiben bildende Kondenswasser nicht über die Seitenwände nach unten läuft, sondern unmittelbar vom Fensterrahmen aufgefangen wird, wo es dann infolge der Beheizung des Fahrzeuginnenraums verdunsten kann.

Verschiedene Ausführungsformen und weitere Einzelheiten der Erfindung werden anhand der beigefügten Zeichnungen erläutert.

2.1816
12.9.79

0009246

- 6 -

In den Zeichnungen zeigt

Fig. 1    ausschnittweise eine Seitenwand eines
          Personenfahrzeugs mit nebeneinanderliegenden Fenstern,

Fig. 2    einen Querschnitt entsprechend der Linie
          II-II in Fig. 1,

Fig. 3    einen Querschnitt entsprechend der Linie
          III-III in Fig. 1,

Fig. 4, 5, 6 und 7 Querschnitte von Hohlprofilen,
          wie sie vorzugsweise für die unteren Längsgurte der in Fig. 1 und 3 dargestellten
          Fensterzarge angewendet werden,

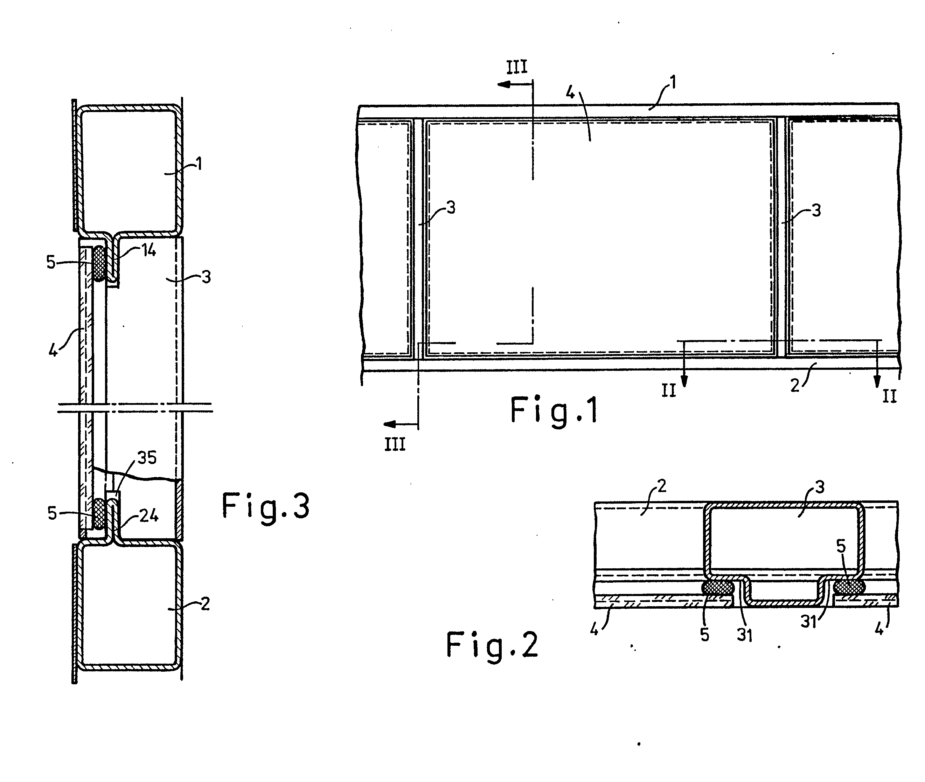

Fig. 8, 9 und 10 Querschnitte von Hohlprofilen, wie
          sie vorzugsweise für die Seitenholme der in
          den Fig. 1 und 2 dargestellten Fensterzarge
          verwendet werden.

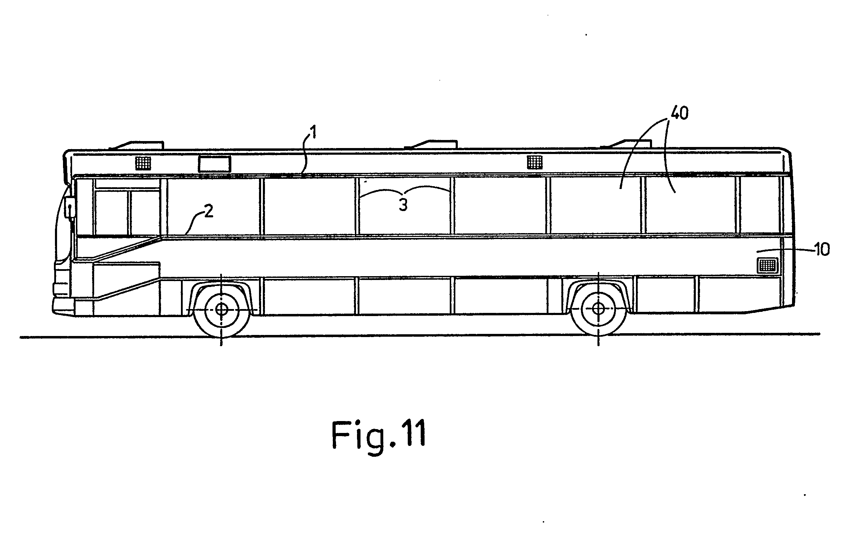

Fig.11    eine perspektivische Ansicht eines erfindungsgemäßen Omnibusses.

Die in Fig. 1 ausschnittweise dargestellte Seitenwand
eines Omnibusses weist einen oberen Längsgurt 1, einen
unteren Längsgurt 2 und vertikale Seitenholme 3 auf.
Die Längsgurte 1, 2 und die Seitenholme 3 bilden jeweils
eine Fensterzarge zur Aufnahme einer Fensterscheibe 4,
die in die Zarge eingeklebt ist.

Im Querschnitt gemäß Fig. 2 ist das Hohlprofil eines Seitenholms 3 im Querschnitt zu sehen. Der untere Längsgurt
ist wieder mit 2 bezeichnet,die Fensterscheiben mit 4.
Bei dem in Fig. 2 dargestellten Hohlquerschnitt des Seitenholms 3 handelt es sich um einen T-Hohlquerschnitt,

2.1816
12.9.79

wobei jeweils ein Winkelraum zwischen dem T-Steg und dem T-Querstück einen Fensterfalz bildet. Zwischen den Fensterscheiben 4 und den Grundflächen 31 der Fensterfalze liegt in Kreuzschraffur angedeutet, jeweils eine Klebstoffschicht 5. Die Fensterscheiben 4 schließen außen bündig mit der Außenfläche des Seitenholms 3, das ist die Fußebene des T-Hohlquerschnitts, ab.

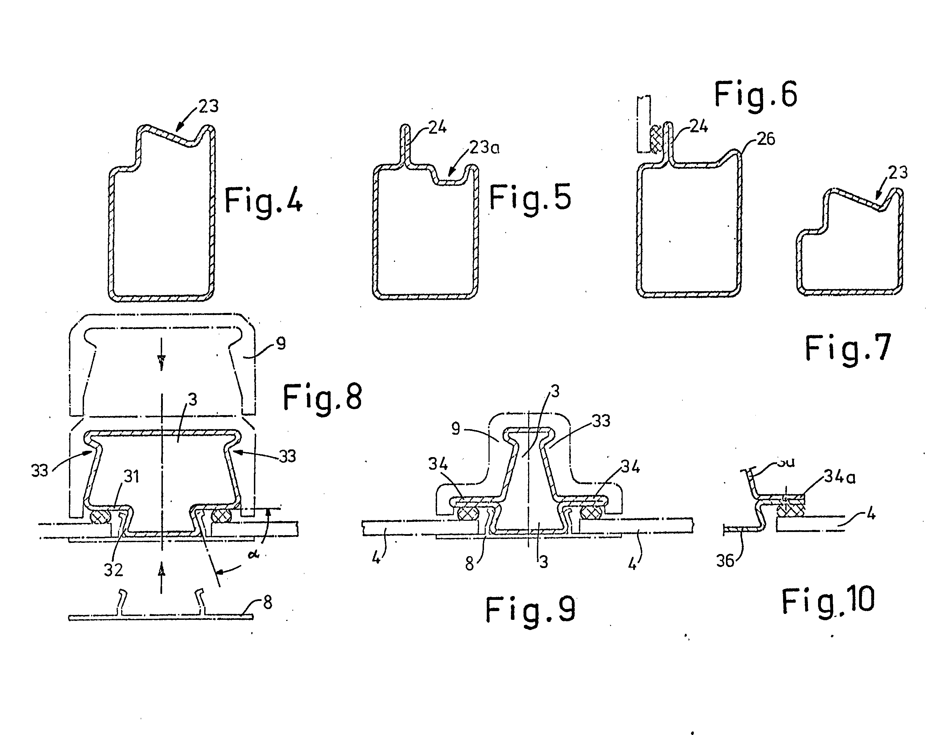

Weitere Querschnitte entsprechend dem in Fig.2 gezeigten Querschnitt sind in den Fig. 8 und 9 sowie teilweise in Fig. 10 aufgezeigt. Der Querschnitt des Seitenholms 3 gemäß Fig. 8 unterscheidet sich vom einfachen T-Hohlquerschnitt nach Fig. 2 dadurch daß die Seitenflächen 32 der Fensterfalze einen Winkel $\alpha$ gegen die Grundflächen 31 einschließen, der kleiner als 90° ist. Dadurch läßt sich, wie es in Fig. 8 angedeutet ist, eine klammerartige Abdeckblende 8 zur Abdeckung der Fugen zwischen den Fensterscheiben 4 und dem Seitenholm 3 leicht auf den Seitenholm aufklipsen. Ein weiterer Unterschied zwischen dem Profil gemäß Fig. 8 und dem Profil gemäß Fig. 2 besteht darin, daß in den gegenüberliegenden Seitenwänden des Seitenholms 3 kerbartige Vertiefungen 33 eingeformt sind. Auf diese Weise läßt sich von der Innenseite der Seitenwand her der Seitenholm 3 mittels eines elastischen Verkleidungselementes 9, das aus Kunststoff, vorzugsweise PU-Schaum besteht, abdecken.

In dem in Fig. 9 dargestellten Querschnitt sind gleiche Bauteile wie in den Fig. 2 und 8 mit gleichen Bezugszeichen versehen. Der Querschnitt des Seitenholms 3 unterscheidet sich dadurch vom Querschnitt nach Fig. 8, daß die Fensterzargen dadurch gebildet werden, daß aus den Seitenwänden des Seitenholms 3 Falznasen 34 herausragen, die integral an das Rohrprofil angeformt sind. Die Falznasen 34 liegen sich symmetrisch gegenüber.

2.1816
12.9.79

In Fig. 10 schließlich ist ein Teilquerschnitt entsprechend Fig. 9 dargestellt, wobei der Seitenholm 3 jedoch zweiteilig, nämlich aus zwei Hutprofilen 3a und 3b ausgebildet ist, deren Ränder Falznasen 34a bilden. Die Hutprofile 3a und 3b sind in den Falznasen 34a durch Punktschweißung zusammengefügt.

Bei dem in Fig. 3 gezeigten Querschnitt sind gleiche Bauteile mit gleichen Bezugszeichen wie in den Fig. 1 und 2 versehen. Der Seitenholm 3 soll den in Fig. 2 dargestellten Hohlquerschnitt aufweisen. Er ist jeweils von seiner Stirnseite her schlitzförmig ausgeschnitten, so daß er auf die Falznasen 14 und 24 des oberen und des unteren Längsgurtes aufsteckbar ist. Anstelle der in Fig. 3 gezeigten Hohlprofile für den oberen und den unteren Längsgurt können auch die in den Fig. 4 bis 7 dargestellten Profile verwendet werden. Dabei sind diese Profile besonders als untere Längsgurte geeignet, da sie alle mit Wasserrinnen versehen sind, indem in der oberen Seitenwand kerbartige Vertiefungen 23, 23a oder aus der Seitenwandebene nach oben herausragende Nasen 26 eingeformt sind. Bei den Profilen gemäß Fig. 4 und Fig. 7 handelt es sich um sogenannte L-Hohlprofile, wobei der L-Winkelraum als Fensterfalz vorgesehen ist. Alle Profile nach den Fig. 4 bis 7 sind auch als Seitenholme verwendbar und zwar dann, wenn Sie nur einseitig eine Fensterscheibe aufnehmen müssen. Obwohl die Einkerbungen 23, 23a oder 26 bei den oberen Längsgurten nicht erforderlich sind, wird man diese Profile jeweils gleichzeitig für den oberen und unteren Längsgurt verwenden.

- 9 -

Anstelle einer einfachen Fensterscheibe kann auch eine Doppelscheibe bzw. Isolierglasscheibe Verwendung finden, wobei dann die Falztiefe der Scheibendicke entsprechen muß.

Fig. 11 zeigt eine Seitenansicht eines erfindungsgemäßen Omnibusses. In einer Seitenwand 10 des Busses sind mehrere Fenster 40 angeordnet, von denen jedes eine Fensterscheibe 4 umfaßt, die in einen Fensterrahmen eingeklebt ist, der jeweils durch einen oberen Längsgurt 1 einen unteren Längsgurt 2 und Seitenholme 3 gebildet wird.

2.1816
12.9.79

- 1 -

P a t e n t a n s p r ü c h e

1. Personenfahrzeug mit einer einen Metallrohrrahmen umfassenden Seitenwand, in der von vertikalen Seitenholmen sowie einem oberen und einem unteren Längsgurt gebildete Fensterzargen zur Aufnahme von in den Metallrohrrahmen einzuklebenden Fensterscheiben vorgesehen sind, dadurch gekennzeichnet, daß die Seitenholme(3) und/oder die Längsgurte (1, 2) Hohlprofile sind, in die die Fensterfalze integral eingeformt sind.

2. Personenfahrzeug nach Anspruch 1, dadurch gekennzeichnet, daß die Tiefe des Fensterfalzes jeweils nur so groß ist, daß eine an der Grundfläche (31) des Falzes unter Zwischenfügung einer Klebstoffschicht (5) anliegende Fensterscheibe (4) bündig mit der Außenfläche des Hohlprofils, in die der Falz eingeformt ist, abschließt.

3. Personenfahrzeug nach Anspruch 1 oder 2, dadurch gekennzeichnet, daß das Hohlprofil ein L-Hohlquerschnitt ist (Fig. 4, Fig. 7).

4. Personenfahrzeug nach Anspruch 1 oder 2, dadurch gekennzeichnet, daß das Hohlprofil ein T-Hohlquerschnitt ist, wobei jeweils ein Winkelraum zwischen dem T-Steg und dem T-Querstück einen Fensterfalz bildet (Fig. 2, Fig. 8).

5. Personenfahrzeug nach den Ansprüchen 1 bis 4, dadurch gekennzeichnet, daß die Seitenholme (3)

2.1816
12.9.79

- 2 -

und/oder die Längsgurte (1, 2) als Vierkantrohr
mit zum Fensterausschnitt hin aus einer Rohrwand
herausragenden Falznase (14, 24), die integral an
das Vierkantrohr angeformt ist, ausgebildet sind.

6. Personenfahrzeug nach Anspruch 5, dadurch gekennzeichnet, daß zwei Falznasen (34) in symmetrischer
Anordnung an gegenüberliegenden Rohrwänden angeformt sind.

7. Personenfahrzeug nach Anspruch 6, dadurch gekennzeichnet, daß das Hohlprofil von zwei mit ihren
Rändern gegeneinander gesetzten Hutprofilen (3a,
3b) gebildet wird, wobei die Ränder die Falznasen
(34a) ausbilden.

8. Personenfahrzeug nach Anspruch 6 oder 7, dadurch
gekennzeichnet, daß die Seitenflächen (32) der
Falze mit den Grundflächen (31) einen Winkel ($\alpha$)
kleiner als 90° einschließen.

9. Personenfahrzeug nach einem oder mehreren der vorhergehenden Ansprüche, dadurch gekennzeichnet, daß
in die Rohrwände, aus denen die Falznasen (34) herausragen, kerbartige Rinnen (33) eingeformt sind.

10. Personenfahrzeug nach einem oder mehreren der Ansprüche 1 bis 8, dadurch gekennzeichnet, daß in der
oberen Seitenwand des unteren Längsgurtes (2) zur
Ausbildung von Wasserrinnen kerbartige Vertiefungen (23, 23a) und/oder eine aus der Seitenwandebene
nach oben herausragende Nase (26) eingeformt sind.

2.1816
12.9.79

- 3 -

11. Personenfahrzeug nach einem oder mehreren der Ansprüche 1 bis 8, dadurch gekennzeichnet, daß in den gegenüberliegenden Seitenwänden der Seitenholme (3) kerbartige Vertiefungen (33) eingeformt sind.

2.1816
12.9.1979

Fig.3

Fig.1

Fig.2

0009246

2.1816 a

Fig.4

Fig.5

Fig.6

Fig.7

Fig.8

Fig.9

Fig.10

Fig.11

0009246

0009246

**Europäisches Patentamt**

## EUROPÄISCHER RECHERCHENBERICHT

Nummer der Anmeldung

EP 79 103 544.7

| EINSCHLÄGIGE DOKUMENTE | | | KLASSIFIKATION DER ANMELDUNG (Int.Cl.3) |
|---|---|---|---|
| Kategorie | Kennzeichnung des Dokuments mit Angabe, soweit erforderlich, der maßgeblichen Teile | betrifft Anspruch | |
| | DE – A1 – 2 734 730 (GENERAL ELECTRIC) <br> * Seite 13, Zeile 11; Fig. 2, 3 * <br> -- | 1,2,4 | B 60 J 1/10 |
| | DE – U – 7 333 031 (G. AUWÄRTER) <br> * Seite 4, Zeile 21; Fig. 2, Position 2 * <br> -- | 1-3 | |
| | DE – U – 6 809 998 (E. HUECK) <br> * Fig. 1 * <br> -- | 1,2 | |
| | DE – U – 1 902 211 (FISCHER-STAHLBAU) <br> * Seite 2, Zeile 8; Fig. 1, 2 * <br> ---- | 1,5,6 | |

**RECHERCHIERTE SACHGEBIETE (Int. Cl.3)**

B 60 J 1/00
B 62 D 31/00
E 06 B 1/00
E 06 B 3/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsatze
E: kollidierende Anmeldung
D: in der Anmeldung angefuhrtes Dokument
L: aus andern Gründen angefuhrtes Dokument
&: Mitglied der gleichen Patentfamilie, ubereinstimmendes Dokument

X | Der vorliegende Recherchenbericht wurde fur alle Patentanspruche erstellt.

| Recherchenort | Abschlußdatum der Recherche | Prüfer |
|---|---|---|
| Berlin | 23-11-1979 | BECKER |

EPA form 1503.1 06.78